# EUROPÄISCHE PATENTANMELDUNG

(11) **EP 2 098 439 A2**
(43) Veröffentlichungstag der Anmeldung: **09.09.2009**
(21) Anmeldenummer: 08105775.4
(22) Anmeldetag: 12.11.2008
(51) Int. Cl.: B62D 15/02

(54) **Verfahren und Vorrichtung zum Einparken eines Kraftfahrzeugs in eine Parklücke mittels eines Einparkassistenten**

(30) Priorität: 07.03.2008 DE 102008000575
(71) Anmelder: ROBERT BOSCH GMBH, 70442 Stuttgart (DE)
(72) Erfinder: Niemz, Volker, 71229, Leonberg (DE)

(57) **Zusammenfassung**

Die Erfindung betrifft ein Verfahren zum Einparken eines Kraftfahrzeugs in eine Parklücke mittels eines Einparkassistenten, wobei der Fahrzeugführer das Kraftfahrzeug in eine Ausgangsposition verbringt, von der aus das unterstützte Einparken erfolgt, wobei bei dem Verbringen in die Ausgangsposition die Parklücke automatisch vermessen wird. Es ist vorgesehen, dass im Falle einer ungünstigen Ausgangsposition der Einparkassistent zur Einnahme einer geeigneten Ausgangsposition dem Fahrzeugführer Fahranweisungen erteilt und/oder selbsttätig das Kraftfahrzeug in die geeignete Ausgangsposition manövriert.

Ferner betrifft die Erfindung eine Vorrichtung zum Einparken eines Kraftfahrzeugs in eine Parklücke mittels eines Einparkassistenten, wobei der Fahrzeugführer das Kraftfahrzeug in eine Ausgangsposition verbringt.

## Beschreibung

Die Erfindung betrifft ein Verfahren zum Einparken eines Kraftfahrzeugs in eine Parklücke mittels eines Einparkassistenten, wobei der Fahrzeugführer das Kraftfahrzeug in eine Ausgangsposition verbringt, von der aus das unterstützte Einparken erfolgt, wobei bei dem Verbringen in die Ausgangsposition die Parklücke automatisch vermessen wird.

Die Erfindung betrifft ferner eine entsprechende Vorrichtung.

### Stand der Technik

Einparkassistenten sind als Fahrerassistenzsysteme bekannt. Insbesondere angesichts der steigenden Verkehrsdichte und dem insbesondere in Ballungszentren knapper werdenden Angebot an Parkraum sind solche Systeme geeignet, die hohe Belastungen der Fahrzeugführer beim Ausfindigmachen einer Parklücke und beim Einparken in dieselbe zu reduzieren. Ein solches System ist beispielsweise aus der DE 38 13 083 A1 bekannt. Bestehende Systeme vermessen im Vorbeifahren in Betracht kommende Parklücken und prüfen, ob diese für die Fahrzeugabmessungen geeignet sind. Wird eine Parklücke als geeignet klassifiziert, wird dies dem Fahrzeugführer signalisiert, dem hierbei nicht mehr abverlangt wird, trotz hohen Verkehrsaufkommens schnell entscheiden zu müssen, ob und wie sein Kraftfahrzeug in die gefundene Parklücke passt. Zur zutreffenden Klassifizierung einer Parklücke ist eine hinreichend genaue geometrische und topografische Beschreibung derselben erforderlich. Nach der Klassifizierung als geeignete Parklücke wird das Kraftfahrzeug von dem Fahrzeugführer entweder aktiv oder passiv in die Parklücke gelenkt, abhängig davon, ob der Einparkassistent dem Fahrzeugführer Handlungsanweisungen erteilt, also noch Handlungen des Fahrzeugführers erforderlich sind, wie beispielsweise Lenkbewegungen, oder ob der Einparkassistent auch die Betätigung der Lenkung übernimmt, sodass von dem Fahrzeugführer lediglich noch Beschleunigungs- und Abbremsvorgänge vorzunehmen sind oder in besonders vorteilhaften Ausführungsformen auch diese automatisch gestaltet werden können; letztlich ist die Unterscheidung in aktive oder passive Einparkassistenz also davon abhängig, ob der Einparkassistent die zum Einparken in die aufgefundene Parklücke errechnete Trajektorie selbsttätig abfahren kann oder nicht. Bei im Stand der Technik bekannten Systemen ist es nicht möglich, nach dem Auffinden einer geeigneten Parklücke unmittelbar eine errechnete Trajektorie abzufahren, da diese einen definierten Ausgangspunkt als Startpunkt benötigt und von der jeweils aktuellen Fahrzeugposition regelmäßig nicht abgefahren und das Kraftfahrzeug entsprechend nicht sofort eingeparkt werden kann. Insbesondere bei Anordnung der Vermessungssensorik (beispielsweise von Ultraschallgebern und -aufnehmern) im vorderen Fahrzeugbereich kann eine exakte Klassifizierung über die Parklücke dann getroffen werden, wenn der Bereich dieser Sensoren das nächstfolgende Hindernis als vordere Parkraumreferenz detektiert. Zu diesem Zeitpunkt ist jedoch ein Einparkvorgang unmöglich. Aktuelle Systeme verlangen daher für das Abfahren der von ihnen errechneten Trajektorie die Einnahme einer bestimmten Ausgangs- beziehungsweise Startposition, von der aus der Einparkvorgang systemgesteuert erfolgen kann. Im geschilderten Fall beispielsweise wäre eine Anweisung an den Fahrzeugführer erfolgt, er solle weiter vorfahren. Hierbei kommen Positionierungsfehler vor, die die korrekte Ausführung des Einparkvorgangs erschweren oder unmöglich machen. Ferner ist es häufig, dass der Fahrzeugführer nicht in geradliniger Bewegung an einer Parklücke vorbeifährt, insbesondere nicht mit gleichbleibendem Abstand. So werden möglicherweise Parklücken angeboten, in die das Kraftfahrzeug nicht passt, oder es werden passende Parklücken verworfen. Insbesondere besteht die Gefahr, dass der Fahrzeugführer das Kraftfahrzeug in einen Bereich bewegt, in dem eine Einparkunterstützung nicht angeboten werden kann. Auch in diesem Fall muss die Parklücke verworfen werden.

Aufgabe der Erfindung ist, den Fahrzeugführer bei der Vorbereitung des eigentlichen Einparkvorganges, also des Abfahrens der Trajektorie, aktiv zu unterstützen, um auch solche Parklücken anbieten zu können, die bislang verworfen werden müssen, da sie aufgrund des Straßenverlaufes und/oder der Geometrie der Bewegungsführung nicht in die Berechnungen der Trajektorie passen, beziehungsweise dem Fahrzeugführer auch solche Parklücken anbieten zu können, die derzeit aufgrund einer zum Abfahren der Trajektorie ungeeigneten Fahrzeugstellung relativ zur Parklücke verworfen werden müssen.

### Offenbarung der Erfindung

Hierzu wird ein Verfahren zum Einparken eines Kraftfahrzeugs in eine Parklücke mittels eines aus dem Stand der Technik bekannten Einparkassistenten vorgeschlagen, wobei der Fahrzeugführer das Kraftfahrzeug in eine Ausgangsposition verbringt, von der aus das unterstützte Einparken erfolgt, wobei bei dem Verbringen in die Ausgangsposition die Parklücke automatisch vermessen wird. Die Vermessung erfolgt im Vorbeifahren an der Parklücke als einem Abschnitt der Bewegung des Verbringens in die Ausgangsposition. Dabei ist vorgesehen, dass im Falle einer ungünstigen Ausgangsposition der Einparkassistent zur Einnahme einer geeigneten Ausgangsposition dem Fahrzeugführer Anweisungen erteilt und/oder selbsttätig das Kraftfahrzeug in die geeignete Ausgangsposition manövriert. Anders als im Stand der Technik wird die geeignete Ausgangsposition also systemunterstützt eingenommen, wobei beispielsweise Schrägstellungen des Kraftfahrzeugs oder ein ungünstiger Abstand von dem Einparkassistenten im Zuge der Vermessung der Parklücke erkannt werden und gezielte Fahranweisungen, beispielsweise zum Ausrichten des Kraftfahrzeugs im Zuge einer Vorwärtsbewegung oder einer Rückwärtsbewegung und mit gezielten Lenkeinschlägen oder Anweisungen zu Lenkeinschlägen zur Einnahme der geeigneten Ausgangsposition gegeben werden. Dem Fahrzeugführer wird demzufolge die Aufgabe abgenommen, das Kraftfahrzeug in Eigenregie in eine geeignete Ausgangsposition zu bringen, von der aus die aus dem Stand der Technik bekannten Einparkassistenten Anweisungen zum Abfahren der Trajektorie geben können oder die Trajektorie selbst abfahren.

In einer Verfahrensausbildung werden dem Fahrzeugführer im Verfahrensablauf aktualisierte Manövrieranweisungen zur Einnahme der geeigneten Ausgangsposition gegeben. Dies bedeutet, dass das Verfahren gewissermaßen rekursiv solange ausgeführt werden kann, bis die geeignete Ausgangsposition eingenommen ist. Insbesondere werden hierbei Abweichungen von der ursprünglich berechneten Trajektorie zur Einnahme der geeigneten Ausgangsposition ausgeglichen.

In einer bevorzugten Verfahrensweiterbildung wird in Ausführung des Verfahrens das Kraftfahrzeug ohne oder mit nur eingeschränkten Lenkeingriffen des Fahrzeugführers in die geeignete Ausgangsposition manövriert. Auch hier findet eine aktuelle Rückkoppelung auf die jeweiligen Fahrumstände und die Anordnung des Fahrzeugs relativ zur Parklücke statt, wobei aber, abhängig vom Grad der Automatisierung des Einparkassistenten und des Verfahrens, nur eingeschränkte oder auch gar keine Eingriffe des Fahrzeugführers erforderlich sind.

In einer weiteren Verfahrensausbildung ist vorgesehen, dass das Verfahren aus einem Verfahrensablauf des Einparkassistenten aufgerufen wird und/oder diesem zugeordnet ist und/oder ein Teil desselben, insbesondere ein Verfahrensabschnitt oder Unterverfahren desselben, ist. Das Verfahren kann demzufolge in das Verfahren des Einparkassistenten, also den eigentlichen, assistierten Einparkvorgangsablauf, eingebunden sein, insbesondere als Unterverfahren (Subroutine) oder dieser Verfahren zugeordnet. Insbesondere ist eine Ausbildung beispielsweise als separate oder integrierte Programmabfolge denkbar.

Weiter wird eine Vorrichtung zum Einparken eines Kraftfahrzeugs in eine Parklücke mittels eines Einparkassistenten vorgeschlagen, wobei der Fahrzeugführer das Kraftfahrzeug in eine Ausgangsposition verbringt, von der aus das unterstütze Einparken erfolgt, wobei bei dem Verbringen in die Ausgangsposition die Parklücke mittels geeigneter Sensoren automatisch vermessen wird. Hierbei ist vorgesehen, dass im Falle einer ungeeigneten Ausgangsposition der Einparkassistent zur Annahme einer geeigneten Ausgangsposition dem Fahrzeugführer Fahranweisungen erteilt und/oder selbsttätig das Kraftfahrzeug in die geeignete Ausgangsposition manövriert. Anders als bisherige Parkassistenten wird nicht lediglich eine Anweisung erteilt, der Fahrzeugführer möge weiter vorfahren (oder eine ähnliche Anweisung), sondern die Vorrichtung zum Einparken eines Kraftfahrzeugs vermisst während des Verbringens des Kraftfahrzeugs in die vorgesehene und/oder in eine geeignete Ausgangposition (beispielsweise von mehreren geeigneten Ausgangspositionen) die Bewegungen des Kraftfahrzeugs, um zu ermitteln, ob und wann eine geeignete Ausgangsposition, insbesondere eine bestimmte, vorher berechnete Ausgangsposition, vorliegt. Hierbei erkennt die Vorrichtung insbesondere, ob der Fahrzeugführer über die an sich vorgesehene, geeignete Ausgangsposition beispielsweise hinausgefahren ist oder sich versetzt zu dieser befindet. Hierzu werden die im Stand der Technik bekannten Aufnehmer, nämlich geeignete Sensoren wie auch zum Vermessen von Parklücken, sowie im Kraftfahrzeug ohnehin vorhandene Wegstreckenaufnehmer verwendet, die während des Einnehmens einer geeigneten Ausgangsposition beziehungsweise generell bei Fahrmanövern zum Einnehmen einer geeigneten Ausgangsposition zutreffende Aussagen über die Anordnung des Kraftfahrzeugs relativ zur vorgesehenen Parklücke erlauben. Auf diese Weise ist es aus einer praktisch unendlichen Vielzahl von Anordnungen des Kraftfahrzeugs relativ zur Parklücke heraus möglich, eine geeignete Ausgangsposition zum Abfahren der vorgesehenen Trajektorie zum Einparken in die vorgesehene Parklücke einzunehmen. Der Fahrzeugführer wird hierbei von den vorbereitenden Fahrhandlungen, insbesondere vom maßvollen Rangieren auf engem Raum und bei hoher Verkehrsdichte und/oder unter Zeitdruck und Anspannung erheblich entlastet.

In einer anderen Ausführungsform ist vorgesehen, dass die Vorrichtung einem Steuergerät eines Einparkassistenten zugeordnet ist. Der Einparkassistent wird üblicherweise von einem Steuergerät, beispielsweise einem in das Fahrzeug integrierten oder des ihm zugeordneten Computer, verkörpert. Die Vorrichtung, die die Einnahme einer geeigneten Ausgangsposition erlaubt, ist hierbei dem Einparkassistenten zugeordnet.

In einer bevorzugten Ausführungsform ist die Vorrichtung in das Steuergerät des Einparkassistenten integriert oder dieses weist die Vorrichtung auf. Bevorzugt nämlich werden keine separaten Bauteile, insbesondere keine separaten und beispielsweise gesondert anzusteuernden Rechnereinheiten verwendet, sondern das Steuergerät des Einparkassistenten wird in einer solchen Weise ausgeführt, dass die Vorrichtung in diese vorteilhaft integriert wird.

Weitere vorteilhafte Ausführungsformen ergeben sich aus einer Kombination der Ansprüche sowie aus nachfolgend beschriebenen Ausführungsbeispielen.

### Kurze Beschreibung der Zeichnungen

Die Erfindung wird nachfolgend anhand eines Ausführungsbeispiels näher erläutert. Es zeigen
- Figur 1: ein schräg vor einer Parklücke stehendes Kraftfahrzeug;
- Figur 2: die Systemreaktion der Vorrichtung zum Einparken aus dieser Situation heraus und

- Figur 3: das Kraftfahrzeug in geeigneter Ausgangsposition zum Abfahren der Einpark-Trajektorie.

### Ausführungsform(en) der Erfindung

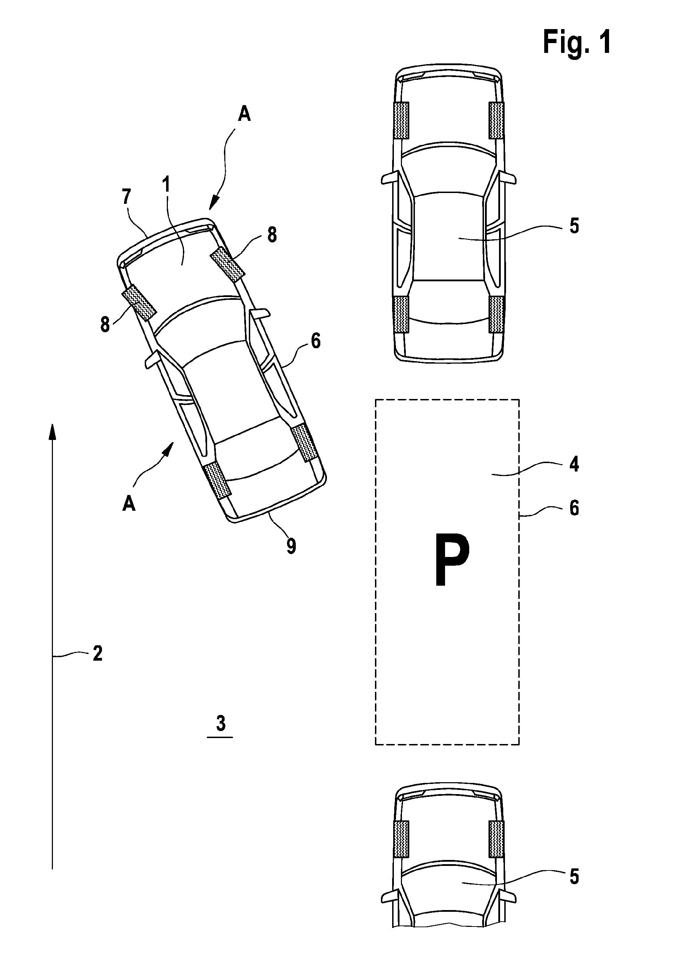

Figur 1 zeigt ein Kraftfahrzeug 1, das im Verlauf 2 einer Straße 3 schräg vor einer Parklücke 4 steht, die zwischen zwei weiteren Fahrzeugen 5 ausgebildet ist. Die Parklücke 4 hat hierbei solche Abmessungen, dass das Kraftfahrzeug 1 mit einer Fahrzeugaußenkontur 6, die durch die Abmessungen des Kraftfahrzeugs 1 in Hinblick auf seine Länge und Breite definiert wird, untergebracht werden kann. Das Kraftfahrzeug 1 steht in einer ungeeigneten Ausgangsposition A, insbesondere, indem es mit seiner Fahrzeugfront 7 schräg von der Parklücke 4 weg und mit nach links eingeschlagenen Vorderrädern 8 steht, wobei sein Fahrzeugheck 9 bereits bis etwa zur Hälfte einen Parallelbereich der Parklücke 4 belegt und ein Rückwärtseinparken in die Parklücke 4 somit bei bekannter Fahrzeuggeometrie und Lenkdynamik nicht möglich ist. Im Stand der Technik müsste die Parklücke 4 aus dieser ungeeigneten Ausgangsposition A heraus verworfen werden. Es ist mit bestehenden Einparkassistenten nicht möglich, aus dieser ungeeigneten Ausgangsposition A heraus in die Parklücke einzuparken, und bestehende Systeme sind nicht in der Lage, bei längerem Rangieren des Kraftfahrzeugs 1 in eine andere als die nun dargestellte ungeeignete Ausgangsposition A eine andere Ausgangsposition zu erkennen, von der aus der Einparkvorgang gestartet werden kann. Bestehende Systeme setzen voraus, dass nach dem Vermessen der Parklücke 4 durch Vorbeifahren des Kraftfahrzeugs 1 der Fahrzeugführer in vorgegebener Weise eine geeignete Ausgangsposition einnimmt; wird diese nicht erreicht, muss die Parklücke verworfen werden.

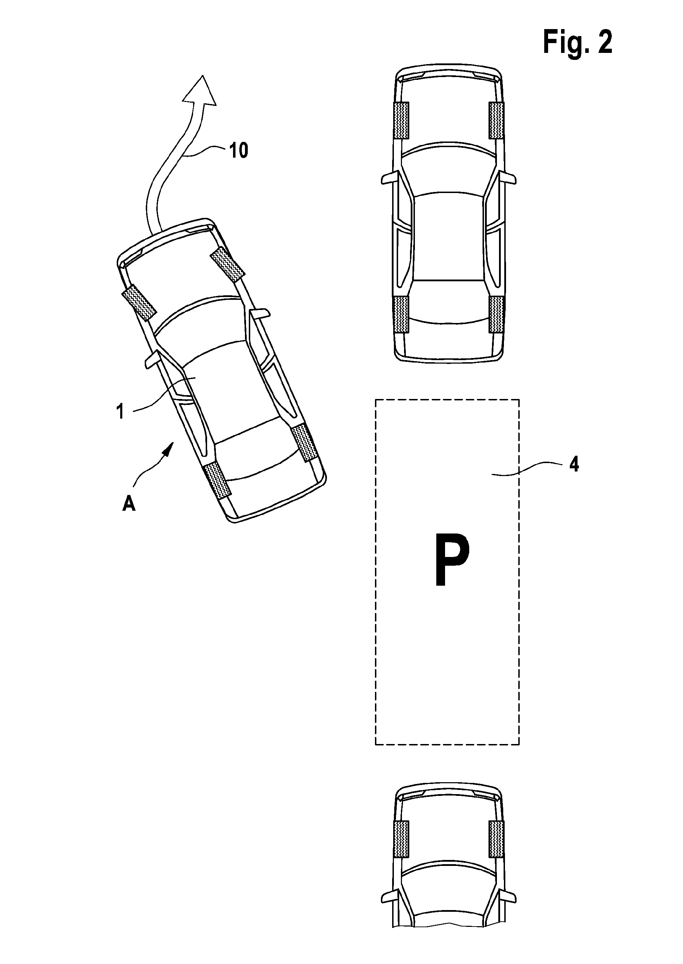

Erfindungsgemäß ist nun jedoch vorgesehen, wie in Figur 2 dargestellt, das Kraftfahrzeug 1 mit Hilfe der Vorrichtung zum Einparken eines Kraftfahrzeugs aus der ungeeigneten Ausgangsposition A heraus durch Manövrieren 10 in eine geeignete Ausgangsposition B zum Abfahren der Einpark-Trajektorie, wie vom Einparkassistenten in Hinblick auf die Parklücke 4 berechnet, zu verbringen. Die Vorrichtung zum Einparken eines Kraftfahrzeugs sieht demzufolge in Ausführung des Verfahrens zum Einparken eines Kraftfahrzeugs vor, das Manövrieren 10 aus der ungeeigneten Ausgangsposition A heraus vorzunehmen, abhängig davon, wie das Kraftfahrzeug 1 relativ zur Parklücke 4 im Raum angeordnet ist. Die Vorrichtung zum Einparken eines Kraftfahrzeugs führt demzufolge das Verfahren zum Einparken des Kraftfahrzeugs in einer solchen Art und Weise aus, dass aus der ungeeigneten Ausgangsposition A heraus eine geeignete Ausgangsposition eingenommen werden kann. Hierzu werden dem Fahrzeugführer entweder Manövrieranweisungen gegeben, oder das Manövrieren selbsttätig durchgeführt, abhängig davon, ob es sich um eine passive oder aktive Einparkunterstützung handelt.

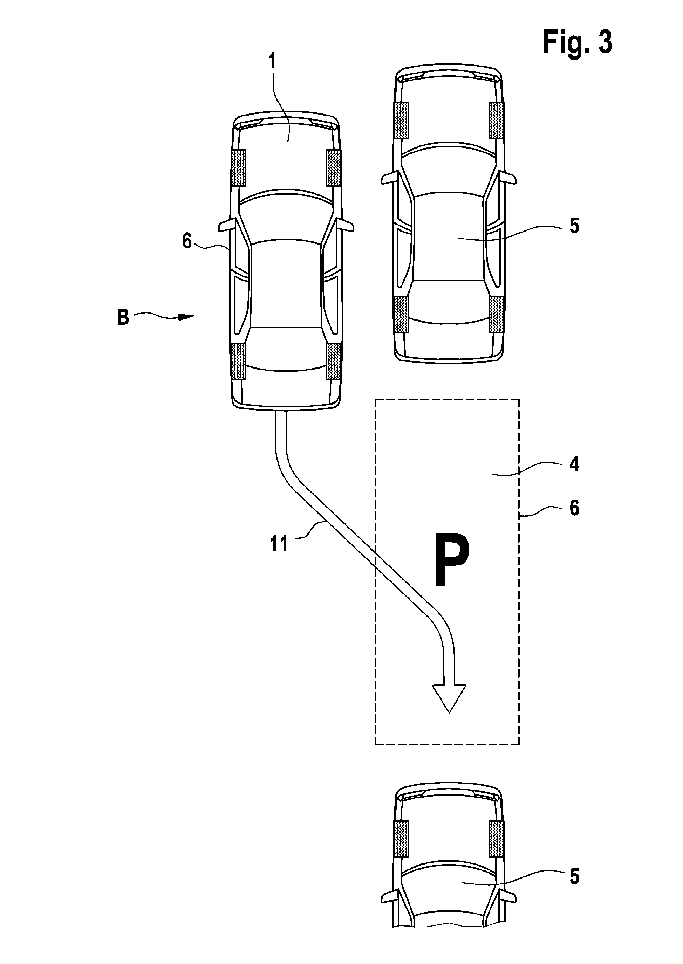

Figur 3 zeigt demzufolge das Kraftfahrzeug 1 in einer geeigneten Ausgangsposition B, in die dieses durch Manövrieren nach Anweisung oder unter aktiver Betätigung der Vorrichtung zum Einparken eines Kraftfahrzeugs verbracht wurde. Von hieraus kann die von dem Einparkassistenten in Hinblick auf die Parklücke 4 errechnete Trajektorie 11 abgefahren werden, so dass das Kraftfahrzeug 1 mit der Fahrzeugaußenkontur 6 regelrichtig in die Parklücke 4 eingeparkt ist. Es ist hierbei vorgesehen, dass über im Kraftfahrzeug 1 angeordnete, aus dem Stand der Technik bekannte Aufnehmer für gefahrene Wegstrecke (nämlich in Vorwärts- wie auch in Rückwärtsrichtung) sowie über Abstandssensoren, die hier nicht dargestellt sind, und wie sie bei Einparkassistenten geläufig sind, die Anordnung des Kraftfahrzeugs 1 relativ zu weiteren Fahrzeugen 5, oder auch anderen Referenzpunkten in Bezug auf die Parklücke 4, beispielsweise feste oder auch mehr oder weniger langsam bewegliche Hindernisse, die geeignete Ausgangsposition B aus einer Vielzahl möglicher geeigneter Ausgangspositionen B berechnet wird, wobei auch punktgenaue und zeitnahe Korrekturen gegebener Manöver möglich sind.

## Patentansprüche

1. Verfahren zum Einparken eines Kraftfahrzeugs in eine Parklücke mittels eines Einparkassistenten, wobei der Fahrzeugführer das Kraftfahrzeug in eine Ausgangsposition verbringt, von der aus das unterstützte Einparken erfolgt, wobei bei dem Verbringen in die Ausgangsposition die Parklücke automatisch vermessen wird, **dadurch gekennzeichnet, dass** im Falle einer ungünstigen Ausgangsposition der Einparkassistent zur Einnahme einer geeigneten Ausgangsposition dem Fahrzeugführer Fahranweisungen erteilt und/oder selbsttätig das Kraftfahrzeug in die geeignete Ausgangsposition manövriert.

2. Verfahren nach Anspruch 1, **dadurch gekennzeichnet, dass** im Verfahrensablauf dem Fahrzeugführer aktualisierte Manövrieranweisungen zur Einnahme der geeigneten Ausgangsposition gegeben werden.

3. Verfahren nach Anspruch 1 oder 2, **dadurch gekennzeichnet, dass** in Ausführung des Verfahrens das Kraftfahrzeug ohne oder mit nur eingeschränkten Lenkeingriffen des Fahrzeugführers in die geeignete Ausgangsposition manövriert wird.

4. Verfahren nach einem der vorhergehenden Ansprüche, **dadurch gekennzeichnet, dass** das Verfahren aus einem Verfahrensablauf des Einparkassistenten aufgerufen wird und/oder diesem zugeordnet ist und/oder ein Teil desselben, insbesondere ein Verfahrensabschnitt oder Unterverfahren desselben, ist.

5. Vorrichtung zum Einparken eines Kraftfahrzeugs in eine Parklücke mittels eines Einparkassistenten, wobei der Fahrzeugführer das Kraftfahrzeug in eine Ausgangsposition verbringt, von der aus das unterstützte Einparken erfolgt, wobei bei dem Verbringen in die Ausgangsposition die Parklücke mittels geeigneter Sensoren automatisch vermessen wird, **dadurch gekennzeichnet, dass** im Falle einer ungeeigneten Ausgangsposition (A) der Einparkassistent zur Einnahme einer geeigneten Ausgangsposition (B) dem Fahrzeugführer Fahranweisungen erteilt und/oder selbsttätig das Kraftfahrzeug (1) in die geeignete Ausgangsposition (B) manövriert.

6. Vorrichtung nach einem der vorhergehenden Ansprüche, **dadurch gekennzeichnet, dass** die Vorrichtung einem Steuergerät eines Einparkassistenten zugeordnet ist.

7. Vorrichtung nach einem der vorhergehenden Ansprüche, **dadurch gekennzeichnet, dass** die Vorrichtung in das Steuergerät des Einparkassistenten integriert ist oder dieses die Vorrichtung aufweist.
